# EUROPEAN PATENT SPECIFICATION

(11) **EP 4 569 172 B1**
(45) Date of publication and mention of the grant of the patent: **01.10.2025**
(21) Application number: 24706732.5
(22) Date of filing: 20.02.2024
(51) Int. Cl.: E02B 17/00, E02B 17/02, B63B 35/44, C25B 15/08, C25B 9/70, C25B 1/04, C25B 9/05

(54) **OFFSHORE HYDROGEN PRODUCTION**
OFFSHORE-WASSERSTOFFPRODUKTION
PRODUCTION D'HYDROGÈNE EN MER

(30) Priority: 06.03.2023 GB 202303261
(43) Date of publication of application: 18.06.2025
(73) Proprietor: Aker Solutions AS, 1325 Lysaker (NO)
(72) Inventor: RENAUD-BEZOT, Charles, 0253 Oslo (NO); SINGER, Thomas, 1364 Fornebu (NO); WOODHOUSE, Simon William, 0194 Oslo (NO); MUJTABA, Amir, 1283 Oslo (NO); BJERKNES, Ole Johan, 0786 Oslo (NO)
(74) Representative: HGF
(86) International application number: PCT/EP2024/054316
(87) International publication number: WO 2024/184065

(56) References cited:
- EP-A1- 4 112 777
- CN-A- 112 593 249
- CN-U- 217 692 681
- DE-A1- 10 055 973

## Description

The present disclosure relates to production of hydrogen offshore, and particularly to an offshore platform for hydrogen production and to production of hydrogen on an offshore platform.

### BACKGROUND

Production of hydrogen (H₂), and particularly production of hydrogen from renewable sources, is currently being investigated by numerous industrial players and there is an increasing political focus on utilizing hydrogen as an energy carrier, among other options, to displace fossil fuels.

In many countries, there are currently substantial efforts to establish offshore renewable power generation, such as offshore wind, and the combination of such plants with hydrogen production locally has been proposed. The produced hydrogen may in such cases, for example, be stored for later use (e.g. to generate electricity during periods of reduced wind power generation), provided for transport (e.g. via ships or pipelines), or used in other ways.

Publications which may be useful to understand the field of technology include CN 217 692 681 U, WO 2022/243211 A1; KR 1020210105854 A; KR 20210105852 A; DE 10055973 A1; KR 1020220152478 A; WO 2021/151443 A1; and CN 115354348 A.

In order to realise offshore hydrogen production at scale, there is a need for systems and methods which allows safe and efficient production. The present disclosure has the objective to provide improved technology for this purpose, or at least to provide useful alternatives to the state of the art.

### SUMMARY

The invention is defined by independent claims 1 and 15. Preferred embodiments of the invention follow from the dependent claims.

According to the invention as defined by claim 1, there is described an offshore hydrogen production platform. The offshore hydrogen production platform may comprise: a support structure and a plurality of vertically spaced decks arranged to be supported by the support structure. The plurality of vertically spaced decks comprising an uppermost deck, wherein the uppermost deck comprises hydrogen production equipment. The offshore hydrogen production platform further comprising an enclosure arranged to encapsulate the hydrogen production equipment.

In use, the offshore hydrogen platform allows for the safe and efficient production of hydrogen. Advantageously, the provision of a plurality of vertically spaced decks allows for the selective arrangement of the hydrogen production equipment on an uppermost deck which can be effectively isolated from other utilities and processing components. The plurality of vertically spaced decks may therefore allow for equipment to be segregated by function on different decks (for example, hydrogen production, electrical and utility) which can increase safety as well as provide for improved access and maintenance. The plurality of vertically spaced decks also permits the horizontal footprint of the offshore hydrogen platform to be minimized and may assist in simplifying the installation and operation of the offshore hydrogen production platform, for example for installation as a single lift installation.

The provision of an enclosure arranged to encapsulate the hydrogen production equipment advantageously allows for effective containment of the hydrogen production equipment, thereby protecting the hydrogen production equipment from the offshore external environment, and minimizing the risks from accidental hydrogen releases.

The offshore hydrogen production platform may be configured to be a temporary installation. The offshore hydrogen production platform may be configured to be a long term installation. For example, the offshore hydrogen production platform may be configured to be installed at an offshore location for ten years, twenty years or thirty years, or more.

The offshore hydrogen production platform may comprise a support structure configured to stand on the sea bed. The support structure may be configured to be affixed to the sea bed. The support structure may be configured to be piled to the sea bed.

The support structure may comprise a floating support structure. The floating support structure may be configured to be anchored to the sea bed. The floating support structure may further comprise at least one anchor to moor the support structure to the sea bed.

The support structure may comprise at least one vertically orientated support. The vertically orientated support may comprise monopile. The support structure may comprise a plurality of monopiles. This arrangement may allow for flexibility in the shape and construction of the platform. For example, the support structure may comprise a plurality of support structures having a respective vertically orientated support. This may enable the offshore hydrogen production platform to be modular and allow for scalability.

The support structure may comprise an offshore jacket. The offshore jacket may comprise a rectangular shaped jacket. The offshore jacket may comprise at least six support legs. This arrangement may advantageously support a preferred layout of the hydrogen production equipment.

The plurality of vertically spaced decks may comprise at least two or at least three decks. The plurality of vertically spaced decks may comprise at least four decks, or five decks or more depending on processing requirements. The vertically spaced decks may be arranged to comprise similar or equal distances between adjacent decks within the support structure. This may enhance material handling and operations

The plurality of vertically spaced decks may comprise an arrangement configured to minimized interfaces. The plurality of vertically spaced decks may comprise an arrangement configured to optimize efficient cable and pipe routing.

The uppermost deck comprises hydrogen production equipment. The hydrogen production equipment may comprise a water electrolysis plant. The water electrolysis plant may comprise a polymer electrolyte membrane (PEM) water electrolysis plant.

The water electrolysis plant may comprise a plurality of electrolysers. The number of electrolysers may be selected based on hydrogen processing requirements. The uppermost deck may comprise sufficient space to allow for additional electrolysers to be added if required. The plurality of electrolysers may be configured to be modular. The plurality of electolysers may be configured to be exchangeable. The plurality of electolysers may comprise stacked electrolysers. The provision of modular and/or exchangeable electrolysers may allow the production of hydrogen to be scaled as required by processing requirements, and may also facilitate ease of repair and maintenance.

The water electrolysis plant may comprise at least one water inlet pipeline arranged to supply process water to the plurality of electrolysers. The process water may comprise deionized water. The water electrolysis plant may further comprise at least one heat exchanger arranged to heat the process water to a required operating temperature. Each of the plurality of electrolysers may comprise a heat exchanger located adjacent to the electrolyser. This may allow for accurate control of the process water feed temperature for each eletrolyser.

The plurality of electrolysers may be arranged pair-wise. This arrangement may facilitate a narrow rectangular horizontal footprint for the offshore hydrogen production equipment. This arrangement may permit minimization of pipe route lengths between the electrolysers and preceding and/or subsequent processing equipment. The plurality of electrolysers may be arranged symmetrically on the uppermost deck. The plurality of electrolysers may be arranged pair-wise adjacent a central water refinement area. The water refinement area may comprise at least one oxygen/water separator configured to separate oxygen from a water and oxygen product stream or streams from the plurality of electrolysers. The plurality of electrolysers being arranged pair-wise adjacent a central water refinement area may permit the use of common or shared water refinement equipment such as oxygen/water separators and/or any associated pipework.

The water electrolysis plant may comprise additional processing units also arranged on the uppermost deck. According to the invention as defined by claim 1, the uppermost deck comprises all of the necessary hydrogen handling equipment. Locating all of the hydrogen handling equipment on a single deck may reduce the risk to other equipment in the event of an accidental hydrogen release and minimize sources of ignition of the hydrogen. Additionally, locating all of the hydrogen handling equipment on a single deck may minimize installation costs and permit sharing of associated equipment.

For example, the water electrolysis plant may further comprise at least one hydrogen compressor arranged to compress the produced hydrogen to a pressure required for export, and/or subsequent processing. The at least one hydrogen compressor may be arranged within the enclosure on the upper most deck. Other associated hydrogen product processing units may be provided, for example deoxidizer systems and/or dehydration systems.

The water electrolysis plant may further comprise a hydrogen export pipeline arranged to transport produced hydrogen from the offshore hydrogen production platform. The hydrogen export pipeline may extend through one or more deck of the platform which is not the uppermost deck, or it may bypass such other deck(s) at a side thereof. The water electrolysis plant may comprise electrolysers configured to operate at high pressure. For example, the electrolysers may be configured to operate at pressures of 30 bar or more. The use of high pressure water electrolysers may reduce the compressor footprint and power requirements, or negate the requirement for an additional compressor for the produced hydrogen.

The enclosure may be arranged to fully encapsulate the uppermost deck. The enclosure may be arranged to partially encapsulate the uppermost deck. According to the invention as defined by claim 1, the hydrogen production equipment is encapsulated by the enclosure.

The enclosure may comprise a passive ventilation system. For example, the enclosure may comprise at least one vent permitting passive ventilation of the enclosure. For example, the enclosure may comprise at least one chimney arranged to allow for convection air flow from the enclosure. For the example, the enclosure may comprise at least one side opening and/or top opening to permit air flow/release of hydrogen from the enclosure. The enclosure may comprise a passive ventilation system which permits natural airflow through the enclosure whilst protecting the process components within the enclosure from external environment. The provision of a passive ventilation system may reduce the operating power requirements for the offshore hydrogen production platform.

Alternatively, or additionally, the offshore hydrogen production platform may comprise a forced ventilation system, wherein the forced ventilation system is operatively associated with the enclosure. For example, the enclosure may be provided with at least one fan arranged to facilitate airflow through the enclosure.

The offshore hydrogen production platform may comprise at least one heating, ventilation and air conditioning (HVAC) system. The HVAC system may be arranged to control the temperature, humidity and air quality within the enclosure. The HVAC system may be operatively associated with the enclosure.

The plurality of vertically spaced decks may comprise a lower deck arranged to comprise utility process components.

For example, the lower deck may comprise a water purification plant. The water purification plant may comprise a desalination plant. The desalination plant may comprise at least one reverse osmosis separator arranged to receive sea water and provide process water to the water electrolysis plant. Alternatively, or additionally, the offshore production platform may comprise a process water supply pipeline arranged to supply process water to the water electrolysis plant from a location remote from the offshore hydrogen production platform. For example, the location remote from the offshore hydrogen production platform may comprise a service vessel comprising a desalination plant, and/or an onshore process water supply.

The lower deck may comprise a cooling system arranged to provide cooling water to the water electrolysis plant. The cooling system may comprise a closed cooling medium loop. The cooling medium may comprise, for example, water, glycol, or both water and glycol. The cooling system may comprise a direct seawater cooling system. A direct seawater cooling system may reduce the size or number of heat exchangers required to provide process water at the desired operating temperature. The cooling system may comprise an open sea water cooling loop operatively associated with a closed cooling medium loop.

The lower deck may be located below the uppermost deck. The lower deck may be located within the support of the offshore hydrogen production platform. The lower deck may be located within the jacket of the offshore hydrogen production platform. The lower deck may be at least partially open to the external environment. The lower deck may comprise a passive ventilation system.

The plurality of vertically spaced decks may comprise a middle deck. The middle deck may be located above the lower deck and below the uppermost deck. The middle deck may be configured to support electrical and instrumental process units for the offshore hydrogen production platform. For example, at least one of the following: batteries, rectifiers, transformers, control system components, telecommunications equipment. The number and capacity of the electrical and instrumental process units may be dictated by the number and capacity of electrolysers of the water electrolysis plant. The electrical process units may be positioned on the middle deck to correspond to hydrogen production equipment on the uppermost deck. This arrangement minimizes the distance between the hydrogen production equipment on the upper deck and the electrical equipment whilst still providing a degree of separation between.

The offshore hydrogen production platform may be configured to operate unmanned. The offshore hydrogen production platform may comprise a control system which can be operated remotely. For example, the control system may be operated from an onshore location.

The offshore hydrogen production platform may be configured to receive power from an external source. For example, the offshore hydrogen production platform may comprise at least one electrical power cable extending from the sea bed to supply electrical power to the offshore hydrogen production platform. The electrical power cable may be operatively connected to all process components on the offshore hydrogen production platform. The electrical power cable may be operatively connected to at least one electrical switchgear provided on a utility deck located below the uppermost deck.

The offshore hydrogen production platform may further comprise a renewable power source. For example, the offshore hydrogen production platform may comprise at least one solar panel, and/or at least one wind turbine generator. The use of renewable power to operate the offshore hydrogen production platform may increase the sustainability of the offshore hydrogen production platform.

In examples where a wind turbine generator is provided to supply electrical power to the offshore hydrogen production platform, the batteries, and/or rectifiers and/or transformers may be located on the wind turbine generator.

According to the invention as defined by claim 15, there is provided a method of producing hydrogen on an offshore hydrogen production platform. The method comprising producing hydrogen using a hydrogen production equipment located on a uppermost deck of an offshore hydrogen platform according to the previous aspects.

### BRIEF DESCRIPTION OF THE DRAWINGS

The above and other characteristics will become clear from the following description of illustrative, non-restrictive examples, with reference to the attached drawings, in which:
Figure 1 is a perspective view of an offshore hydrogen production platform according to the present disclosure;
Figure 2 is an elevation view of an offshore hydrogen production platform according to the present disclosure;
Figure 3 is an elevation view of an alternative offshore hydrogen production platform according to the present disclosure;
Figure 4 is a plan view of a lower deck of an offshore hydrogen production platform comprising utility processing units according to the present disclosure;
Figure 5 is a plan view of a middle deck of an offshore hydrogen production platform comprising electrical and instrumentation according to the present disclosure; and
Figure 6 is a plan view of an uppermost deck of an offshore hydrogen production platform comprising a water electrolysis plant according to the present disclosure.

### DETAILED DESCRIPTION

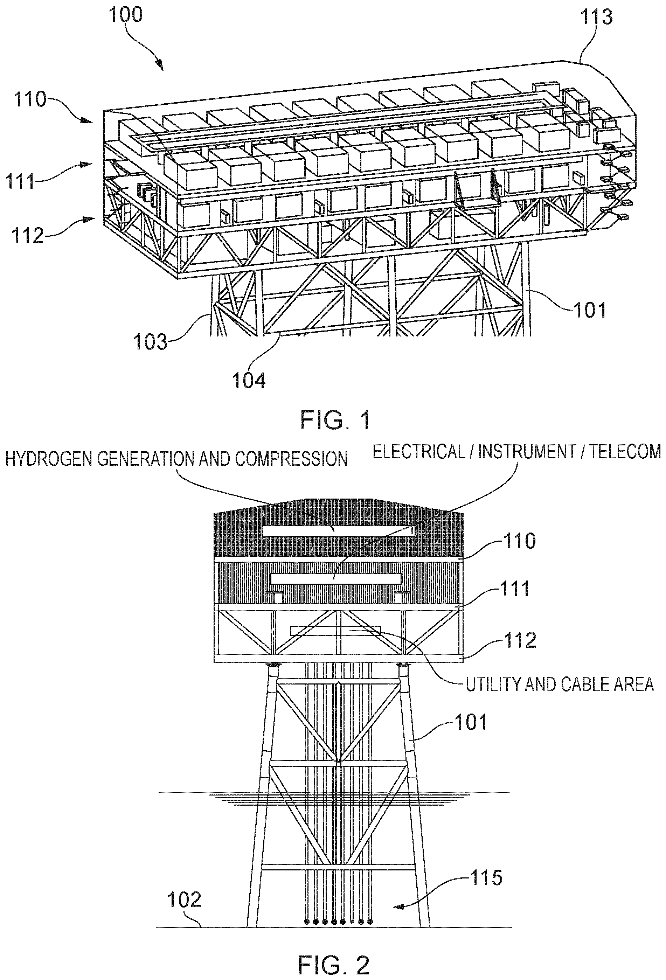

An offshore hydrogen production platform 100 is shown in Figure 1. The offshore hydrogen production platform 100 comprises a support structure 101 which in this example takes the form of an offshore jacket comprising six vertical supports 103 which extend to the sea bed 102. The vertical supports 103 are additionally provided with a horizontal frame network 104.

The offshore hydrogen production platform 100 comprises three vertically spaced decks 110, 111, 112. It will be appreciated that any number of decks may be provided as dictated by process conditions, for example two decks, four decks, or more. The uppermost deck 110 comprises a water electrolysis plant 130 arranged on the deck 110. An enclosure 113 is provided to encapsulate the water electrolysis plant 130. A middle deck 111 is provided below the uppermost deck 110. The middle deck 111 comprises instrumentation and electrical equipment required for the operation of the water electrolysis plant 130 and other utilities on the offshore hydrogen production platform 100. A lower deck 112 is provided below the middle deck 111 and is provided with service utility processing units such as a water purification system 123. The offshore hydrogen production platform 100 is configured to operate unmanned.

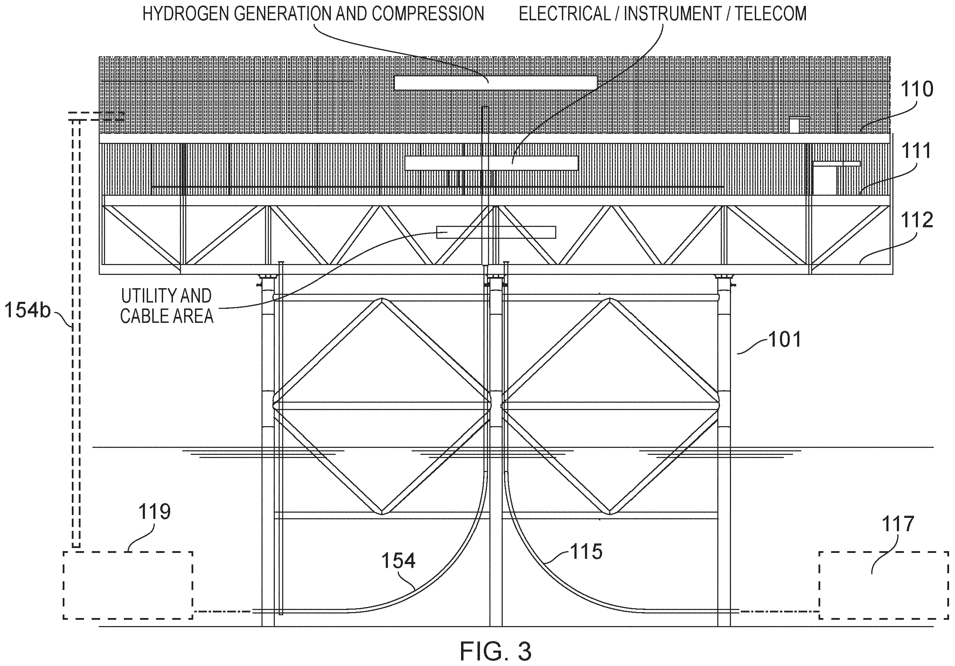

The offshore hydrogen production platform 100 comprises an electrical power cable 115 extending from the sea bed 102 and operatively connected to the electrical equipment on the middle deck 111. Multiple electrical power cables 115 can be provided as shown in Figure 3. The electrical power cables 115 may supply electrical power from an electrical power source 117 located remotely from the offshore hydrogen production platform 100. The electrical power source 117 may comprise a renewable source such as a wind turbine generator and/or solar power source and/or a traditional hydrocarbon based electricity supply.

As shown in Figures 1 to 3, the three decks 110, 111 and 112 are arranged to have a similar spacing between adjacent decks. The similar spacing may be equal or approximately equal spacing. This arrangement enhances material handling and operations.

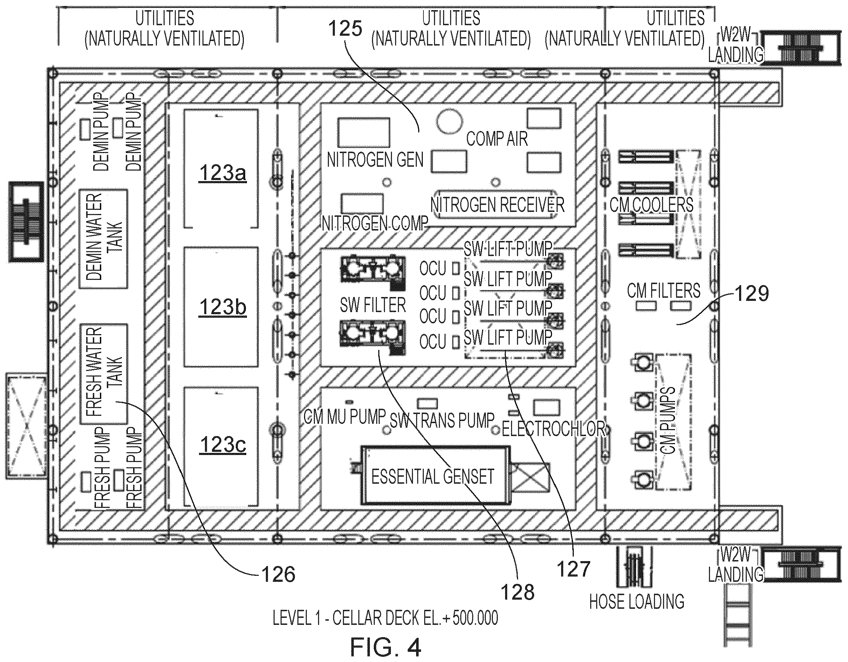

A detailed plan view of the lower deck 112 is shown in Figure 4. The lower deck 112 is naturally ventilated and is formed within the support 101 of the offshore hydrogen production platform 100. The support 101 forms side walls for the lower deck 112, and allow the lower deck 112 to be substantially open to the external environment, permitting passive ventilation of the lower deck 112. The lower deck 112 is provided with a sea water purification plant 123a, 123b, 123c configured to produce water for use in the water electrolyser plant 130 on the uppermost deck 110. Fresh water/deionized water storage tanks 126 are located adjacent the sea water purification plant Other associated water process units are provided on the lower deck 112, for example seawater pumps 127 and filtration units 128. A closed loop cooling system 129 is also provided on the lower deck 112. The cooling system 129 utilises sea water. A nitrogen generation plant 125 is also provided. In some examples, the lower deck 112 may also comprise hydrogen export processing equipment such as hydrogen compressors and the hydrogen export riser.

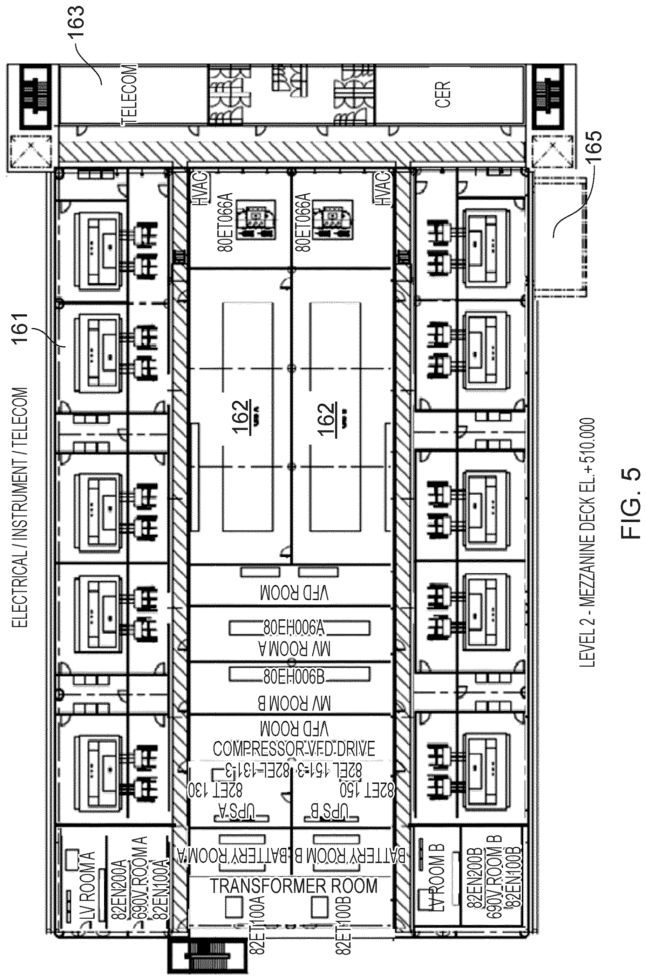

A detailed plan view of the middle deck 111 is shown in Figure 5. The middle deck is positioned below the uppermost deck 110 and above the lower deck 112. The middle deck 111 may be a mezzanine deck. The middle deck 111 comprises electrical equipment, instrumentation and telecommunication equipment 163 (for, example control system apparatus) On the middle deck 111, electrolyser transformers/rectifiers 161 are arranged around the perimeter of the middle deck 111. This facilitates ease of installation and allows the transformers/rectifiers to be easily replaced or maintained by removal from the side of the middle deck 111 using a transversely movable platform 165 which is located at the side of the middle deck 111. The number of electrolyser transformers/rectifiers 161 corresponds to the number of electrolysers 132 and these are positioned to correspond to the position of the electrolysers 132 on the upper deck 110 above the middle deck 111. In Figure 5, the electrolyser transformers/rectifiers 161 are positioned on the middle deck 111 directly below the electrolysers 132 on the upper deck 110. This minimises the distance between the electrolysers 132 and the transformers/rectifiers 161 to reduce electrical losses. Electrical switch gears 162 are provided and connected to the inlet power cable 115.

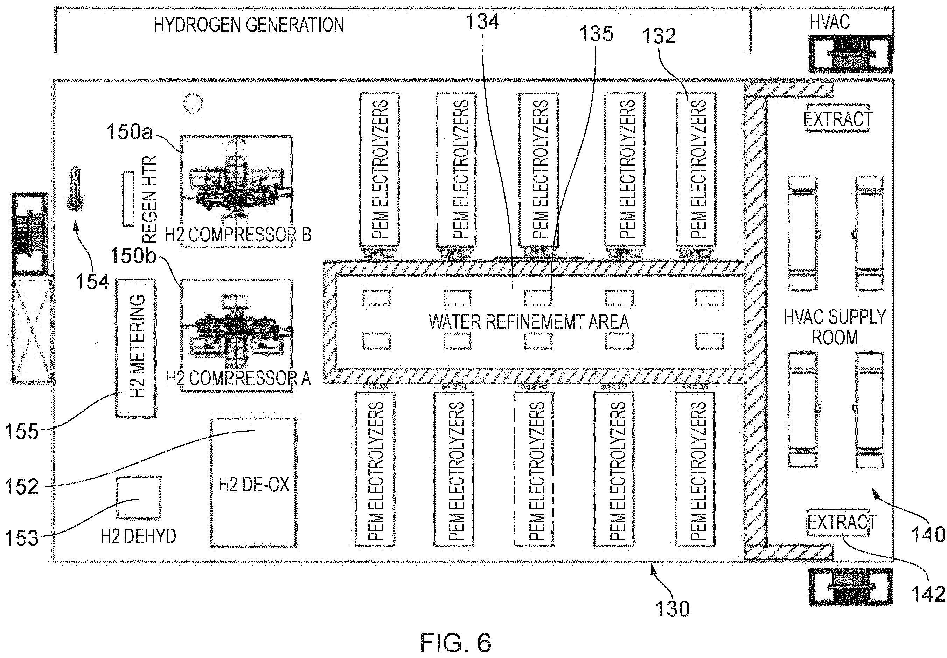

A detailed plan view of the uppermost deck 110 is shown in Figure 6. The uppermost deck 110 is arranged into at least two zones - a hydrogen production zone comprising a water electrolysis plant 130 and HVAC zone. The hydrogen production zone comprises a plurality of polymer electrolyte membrane (PEM) electrolysers 132 arranged around the perimeter of a water refinement area 134. The water refinement area 134 is located in a central region of the uppermost deck 110. The example shown in Figure 6 shows ten electrolysers 132 arranged symmetrically along two sides of the water refinement area 134. It will be appreciated that the number of electrolysers will be dictated by production requirements. The water refinement area 134 comprises plurality of oxygen/water separators 135. In this example, an oxygen/ water separator 135 is provided to be operatively associated with each electrolyser 132 to process the oxygen/water product stream from each electrolyser 132. The electrolysers 132 are arranged to receive deionized water from the water storage tanks 126 on the lower deck 112. Each electrolyser 132 will comprise a heat exchanger arranged to heat the inlet deionized water to the required operating temperature.

Hydrogen processing equipment is also provided on the uppermost deck 110. For example, hydrogen de-oxidizer 152 and dehydrator 153 are located adjacent the electrolysers 132 for processing of the hydrogen product stream from the electrolysers 132. Hydrogen export compressors 150a, 150b are also provided to pressurize the produced hydrogen for export via hydrogen export riser 154 (and associated hydrogen metering equipment 155). The size and number of hydrogen compressors required will be dependent upon the operating conditions of the electrolysers 132 and export requirements. For example, where high pressure electrolysers are present, there may be no hydrogen export compressors.

In Figure 3, the hydrogen export riser 154 is shown to travel from the upper deck 110 through middle 111 and lower deck 112 to the seabed for further processing or storage 119. Alternatively, the hydrogen export riser 154 may be arranged to travel external to the decks (shown by dashed outline 154b on Figure 3). In this alternative configuration, the interface between the hydrogen export riser 154b and the equipment on the middle 111 and lower decks 112 is removed, and this can contribute to minimising ignition risks on the platform 100.In both possible arrangements for the hydrogen export riser 154, 154b, it will be noted that the hydrogen production platform is arranged such that hydrogen will only ever be present (during normal operations) within hydrogen production equipment on the upper deck 110 and within the export riser 154 or 154b.

As shown in Figures 1 to 3, the uppermost deck 110 is encapsulated by an enclosure 113. The enclosure 113 is arranged to encapsulate all of the hydrogen handling equipment. This facilitates containment of hydrogen in the event of an accidental hydrogen release. The enclosure 113 also encapsulates a HVAC system 140. The HVAC system 140 is arranged to control the temperature, humidity and air quality within the enclosure 113. Extraction fans 142 are provided in the enclosure 113.

The invention is not limited by the embodiments described above; reference should be had to the appended claims.

## Claims

1. An offshore hydrogen production platform (100) comprising:
a support structure (101) and plurality of vertically spaced decks (110, 111, 112) arranged to be supported by the support structure (101); wherein
the plurality of vertically spaced decks (110, 111, 112) comprise an uppermost deck (110), and wherein the uppermost deck (110) comprises a hydrogen production equipment (130); wherein
the offshore hydrogen production platform (100) further comprises an enclosure (113) arranged to encapsulate the hydrogen production equipment (130); and
wherein all hydrogen handling process equipment for offshore hydrogen production is located on the uppermost deck (110) and arranged to be encapsulated by the enclosure (113).

2. The offshore hydrogen production platform (100) of claim 1,
wherein the support structure (101) is configured to stand on the sea bed or
wherein the support structure (101) comprises a floating support structure.

3. The offshore hydrogen production platform (100) of any preceding claim, wherein the support structure (101) comprises a monopile, optionally.
wherein the support structure (101) comprises a plurality of monopiles.

4. The offshore hydrogen production platform (100) of claims 1 to 3, wherein the support structure (101) comprises an offshore jacket.

5. The offshore hydrogen production platform (100) of any preceding claim, wherein at least one of:
the plurality of vertically spaced decks (110, 111, 112) comprises three decks (110, 111, 112); and
wherein the plurality vertically spaced decks (110, 111, 112) are arranged to comprise equal distances between adjacent decks.

6. The offshore hydrogen production platform (100) of any preceding claim, wherein the hydrogen production equipment (130) comprises a polymer electrolyte membrane (PEM) water electrolysis plant (130), wherein the PEM water electrolysis plant (130) comprises a plurality of electrolysers (132).

7. The offshore hydrogen production platform (100) of claim 6, wherein at least one of:
the plurality of electrolysers (132) are configured to be at least one of: stacked, modular and/or exchangeable; the plurality of electrolysers (132) are arranged symmetrically on the uppermost deck (110); and
wherein the plurality of electrolysers (132) are arranged pair-wise adjacent a common central water refinement area (134).

8. The offshore hydrogen production platform (100) of any preceding claim, wherein the enclosure (113) is arranged to fully encapsulate the uppermost deck (110).

9. The offshore hydrogen production platform (100) of any preceding claim, wherein the enclosure (113) comprises a passive ventilation system; or
further comprising a forced ventilation system (140), wherein the forced ventilation system (140) is operatively associated with the enclosure (113).

10. The offshore hydrogen production platform (100) of any preceding claim, further comprising a water purification plant (123).

11. The offshore hydrogen production platform of any preceding claim, further comprising a lower deck (112) arranged within the support structure (101), wherein the lower deck (112) is located below the uppermost deck (110), and wherein the lower deck (112) comprises a passive ventilation arrangement.

12. The offshore hydrogen production platform (100) of claim 11, further comprising a water purification plant (123), optionally wherein the water purification plant (123) is located on the lower deck (112).

13. The offshore hydrogen production platform (100) of any claim 11 or 12 further comprising a middle deck (111), wherein the middle deck (111) is located above the lower deck (112) and below the uppermost deck (110), and wherein the middle deck (111) comprises electrical and instrumental process units, optionally
wherein the electrical process units (161) are positioned on the middle deck (111) to correspond to hydrogen production equipment (130) on the uppermost deck.

14. The offshore hydrogen production platform (100) of any preceding claim, further comprising at least one renewable energy source, optionally wherein the offshore hydrogen production platform (100) further comprises at least one wind turbine generator.

15. A method of producing hydrogen on an offshore hydrogen production platform (100), the method comprising producing hydrogen using hydrogen production equipment (130) located on a uppermost deck (110) of an offshore hydrogen platform (100) according to any of claims 1 to 14.

## Patentansprüche

1. Offshore-Wasserstoffproduktionsplattform (100), umfassend:
eine Trägerstruktur (101) und eine Vielzahl vertikal beabstandeter Decks (110, 111, 112), die angeordnet sind, um von der Trägerstruktur (101) gestützt zu werden; wobei die Vielzahl vertikal beabstandeter Decks (110, 111, 112) ein oberstes Deck (110) umfasst, und
wobei das oberste Deck (110) eine Wasserstoffproduktionsausrüstung (130) umfasst; wobei die Offshore-Wasserstoffproduktionsplattform (100) ferner ein Gehäuse (113) umfasst, das angeordnet ist, dass es die Wasserstoffproduktionsausrüstung (130) einkapselt; und
wobei sich die gesamte Wasserstoffhandhabungsprozessausrüstung für die Offshore-Wasserstoffproduktion auf dem obersten Deck (110) befindet und angeordnet ist, dass sie von dem Gehäuse (113) eingekapselt wird.

2. Offshore-Wasserstoffproduktionsplattform (100) nach Anspruch 1,
wobei die Trägerstruktur (101) so konfiguriert ist, dass sie auf dem Meeresboden steht, oder
wobei die Trägerstruktur (101) eine schwimmende Trägerstruktur umfasst.

3. Offshore-Wasserstoffproduktionsplattform (100) nach einem vorhergehenden Anspruch,
wobei die Trägerstruktur (101) optional einen Monopile umfasst,
wobei die Trägerstruktur (101) eine Vielzahl von Monopiles umfasst.

4. Offshore-Wasserstoffproduktionsplattform (100) nach Ansprüchen 1 bis 3, wobei die Trägerstruktur (101) einen Offshore-Mantel umfasst.

5. Offshore-Wasserstoffproduktionsplattform (100) nach einem vorhergehenden Anspruch, wobei mindestens eine:
der Vielzahl vertikal beabstandeter Decks (110, 111, 112) drei Decks (110, 111, 112) umfasst; und
wobei die Vielzahl vertikal beabstandeter Decks (110, 111, 112) angeordnet ist, um gleiche Abstände zwischen benachbarten Decks zu umfassen.

6. Offshore-Wasserstoffproduktionsplattform (100) nach einem vorhergehenden Anspruch, wobei die Wasserstoffproduktionsausrüstung (130) eine Polymerelektrolytmembran (PEM) - Wasserelektrolyseanlage (130) umfasst, wobei die PEM-Wasserelektrolyseanlage (130) eine Vielzahl von Elektrolyseuren (132) umfasst.

7. Offshore-Wasserstoffproduktionsplattform (100) nach Anspruch 6, wobei mindestens eine:
der Vielzahl von Elektrolyseuren (132) so konfiguriert ist, dass sie mindestens eines von:
gestapelt, modular und/oder austauschbar ist; die Vielzahl von Elektrolyseuren (132) symmetrisch auf dem obersten Deck (110) angeordnet ist; und
wobei die Vielzahl von Elektrolyseuren (132) paarweise neben einem gemeinsamen zentralen Wasseraufbereitungsbereich (134) angeordnet sind.

8. Offshore-Wasserstoffproduktionsplattform (100) nach einem vorhergehenden Anspruch, wobei das Gehäuse (113) angeordnet ist, dass es das oberste Deck (110) vollständig einkapselt.

9. Offshore-Wasserstoffproduktionsplattform (100) nach einem vorhergehenden Anspruch, wobei das Gehäuse (113) ein passives Belüftungssystem umfasst; oder
ferner umfassend ein Zwangsbelüftungssystem (140), wobei das Zwangsbelüftungssystem (140) mit dem Gehäuse (113) wirkverbunden ist.

10. Offshore-Wasserstoffproduktionsplattform (100) nach einem vorhergehenden Anspruch, ferner umfassend eine Wasserreinigungsanlage (123).

11. Offshore-Wasserstoffproduktionsplattform nach einem vorhergehenden Anspruch, ferner umfassend ein unteres Deck (112), das innerhalb der Trägerstruktur (101) angeordnet ist, wobei sich das untere Deck (112) unterhalb des obersten Decks (110) befindet, und wobei das untere Deck (112) eine passive Belüftungsanordnung umfasst.

12. Offshore-Wasserstoffproduktionsplattform (100) nach Anspruch 11, ferner umfassend eine Wasserreinigungsanlage (123), wobei sich die Wasserreinigungsanlage (123) optional auf dem unteren Deck (112) befindet.

13. Offshore-Wasserstoffproduktionsplattform (100) nach einem der Ansprüche 11 oder 12, ferner umfassend ein mittleres Deck (111), wobei sich das mittlere Deck (111) oberhalb des unteren Decks (112) und unterhalb des obersten Decks (110) befindet, und wobei das mittlere Deck (111) elektrische und instrumentelle Prozesseinheiten umfasst, optional wobei die elektrischen Prozesseinheiten (161) auf dem mittleren Deck (111) positioniert sind, dass sie einer Wasserstoffproduktionsausrüstung (130) auf dem obersten Deck entsprechen.

14. Offshore-Wasserstoffproduktionsplattform (100) nach einem vorhergehenden Anspruch, ferner umfassend mindestens eine Quelle erneuerbarer Energie, wobei optional die Offshore-Wasserstoffproduktionsplattform (100) ferner mindestens einen Windturbinengenerator umfasst.

15. Verfahren zum Produzieren von Wasserstoff auf einer Offshore-Wasserstoffproduktionsplattform (100), wobei das Verfahren das Produzieren von Wasserstoff unter Verwendung von Wasserstoffproduktionsausrüstung (130) umfasst, die sich auf einem obersten Deck (110) einer Offshore-Wasserstoffplattform (100) nach einem der Ansprüche 1 bis 14 befindet.

## Revendications

1. Plateforme de production d'hydrogène en mer (100) comprenant :
une structure de soutien (101) et une pluralité de ponts espacés verticalement (110, 111, 112) agencés pour être soutenus par la structure de soutien (101) ; dans laquelle :
la pluralité de ponts espacés verticalement (110, 111, 112) comprend un pont supérieur (110), et dans laquelle le pont supérieur (110) comprend un équipement de production d'hydrogène (130) ;
dans laquelle :
la plateforme de production d'hydrogène en mer (100) comprend en outre une enceinte (113) agencée pour encapsuler l'équipement de production d'hydrogène (130) ; et
dans laquelle tout l'équipement de traitement de manipulation d'hydrogène pour la production d'hydrogène en mer est situé sur le pont supérieur (110) et agencé pour être encapsulé par l'enceinte (113).

2. Plateforme de production d'hydrogène en mer (100) selon la revendication 1,
dans laquelle la structure de soutien (101) est configurée pour se tenir sur le fond marin ou
dans laquelle la structure de soutien (101) comprend une structure de soutien flottante.

3. Plateforme de production d'hydrogène en mer (100) selon l'une quelconque des revendications précédentes, dans laquelle la structure de soutien (101) comprend un monopieu, éventuellement dans laquelle la structure de soutien (101) comprend une pluralité de monopieux.

4. Plateforme de production d'hydrogène en mer (100) selon les revendications 1 à 3, dans laquelle la structure de soutien (101) comprend une plateforme offshore.

5. Plateforme de production d'hydrogène en mer (100) selon l'une quelconque des revendications précédentes, dans laquelle au moins l'un de la pluralité de ponts espacés verticalement (110, 111, 112) comprend trois ponts (110, 111, 112) ; et
dans laquelle la pluralité de ponts espacés verticalement (110, 111, 112) sont agencés pour comprendre des distances égales entre les ponts adjacents.

6. Plateforme de production d'hydrogène en mer (100) selon l'une quelconque des revendications précédentes, dans laquelle l'équipement de production d'hydrogène (130) comprend une installation d'électrolyse de l'eau à membrane électrolytique polymère (PEM) (130), dans laquelle l'installation d'électrolyse de l'eau PEM (130) comprend une pluralité d'électrolyseurs (132).

7. Plateforme de production d'hydrogène en mer (100) selon la revendication 6, dans laquelle au moins l'un de la pluralité d'électrolyseurs (132) est configuré pour être au moins l'un parmi :
empilé, modulaire et/ou échangeable ; la pluralité d'électrolyseurs (132) est agencée symétriquement sur le pont supérieur (110) ; et
dans laquelle la pluralité d'électrolyseurs (132) sont agencés par paires, adjacents à une zone centrale commune de raffinage de l'eau (134).

8. Plateforme de production d'hydrogène en mer (100) selon l'une quelconque des revendications précédentes, dans laquelle l'enceinte (113) est agencée pour encapsuler complètement le pont supérieur (110).

9. Plateforme de production d'hydrogène en mer (100) selon l'une quelconque des revendications précédentes, dans laquelle l'enceinte (113) comprend un système de ventilation passive ; ou
comprenant en outre un système de ventilation forcée (140), le système de ventilation forcée (140) étant associé de manière fonctionnelle à l'enceinte (113).

10. Plateforme de production d'hydrogène en mer (100) selon l'une quelconque des revendications précédentes, comprenant en outre une installation de purification d'eau (123).

11. Plateforme de production d'hydrogène en mer selon l'une quelconque des revendications précédentes, comprenant en outre un pont inférieur (112) agencé à l'intérieur de la structure de support (101), dans laquelle le pont inférieur (112) est situé en dessous du pont supérieur (110), et dans laquelle le pont inférieur (112) comprend un agencement de ventilation passive.

12. Plateforme de production d'hydrogène en mer (100) selon la revendication 11, comprenant en outre une installation de purification d'eau (123), éventuellement dans laquelle l'installation de purification d'eau (123) est située sur le pont inférieur (112).

13. Plateforme de production d'hydrogène en mer (100) selon l'une quelconque des revendications 11 ou 12, comprenant en outre un pont central (111), dans laquelle le pont central (111) est situé au-dessus du pont inférieur (112) et en dessous du pont supérieur (110), et dans laquelle le pont central (111) comprend des unités de traitement électrique et instrumental, éventuellement
dans laquelle les unités de traitement électrique (161) sont positionnées sur le pont central (111) pour correspondre à l'équipement de production d'hydrogène (130) sur le pont supérieur.

14. Plateforme de production d'hydrogène en mer (100) selon l'une quelconque des revendications précédentes, comprenant en outre au moins une source d'énergie renouvelable, éventuellement dans laquelle la plateforme de production d'hydrogène en mer (100) comprend en outre au moins une turbogénératrice.

15. Procédé de production d'hydrogène sur une plateforme de production d'hydrogène en mer (100), le procédé comprenant la production d'hydrogène à l'aide d'un équipement de production d'hydrogène (130) situé sur un pont supérieur (110) d'une plateforme de production d'hydrogène en mer (100) selon l'une quelconque des revendications 1 à 14.
